# EUROPEAN PATENT APPLICATION

(11) **EP 1 924 081 A2**
(43) Date of publication of application: **21.05.2008**
(21) Application number: 07120104.0
(22) Date of filing: 06.11.2007
(51) Int. Cl.: H04N 5/217

(54) **Display apparatus, control method thereof and display system**

(30) Priority: 20.11.2006 KR 20060114833
(71) Applicant: Samsung Electronics Co., Ltd., Suwon-si Gyeonggi-do 443-742 (KR)
(72) Inventor: Lee, Su-jin, Gyeonggi-do (KR); Kim, Tai-hung, Gyeonggi-do (KR)
(74) Representative: Grootscholten, Johannes A.M.

(57) **Abstract**

A display apparatus includes: a signal receiving unit which receives an image signal from an imaging device; an image processor which performs an image processing operation on the image signal received by the signal receiving unit; a display unit which displays an image based on the image signal processed by the image processor; and a controller which determines characteristics of the imaging device, and controls the image processor to perform a color compensation on the displayed image according to the characteristics of the imaging device.

## Description

### BACKGROUND

### 1. Field of Invention

Apparatuses and methods consistent with the present invention relate to a display, and a control of the display, and more particularly, to a display apparatus displaying an image based on an image signal received from an imaging device equipped with a video adapter, a control method of the display apparatus and a display system.

### 2. Description of the Related Art

A display apparatus such as a liquid crystal display (LCD) monitor receives a video signal from an imaging device, performs a predetermined image processing on the received video signal, and displays an image. The imaging device includes a computer system, e.g., a personal computer (PC). Typically, the imaging device has a video adapter that generates an image signal with an appropriate format for a display apparatus.

However, characteristics of a video adapter may vary depending on a manufacturer or a release version of the video adapter, and each image has an RGB level difference due to the varying characteristics of a video adapter. Therefore, when the characteristics of the video adapter do not match with that of the display apparatus, an image displayed on the display apparatus may not have optimal color quality.

According to the prior art (Korean Patent Registration No. 10-400617), a method for automatically compensating colors to be in a standard quality or an optimal quality by employing a video adapter and a display profile has been suggested. However, this method does not take characteristics of a display into account, and requires information regarding various characteristics of video adapters in advance.

Color compensation may be performed for a video adapter when a display apparatus is manufactured or after sales service (A/S) is provided by a technical engineer. However, a user may temporarily connect an imaging device and the display apparatus or replace either the imaging device or the display, and accordingly characteristics of the video adapter and the display apparatus may not be compatible with each other.

### SUMMARY

Accordingly, it is an aspect of the present invention to provide a display apparatus, a control method of the display apparatus, and a display system having an advantage of improving image quality by performing automatic color compensation appropriate for characteristics of a video adapter.

Another aspect of the present invention is to provide a display apparatus, a control method of the display apparatus, and a display system for improving user convenience by performing automatic color compensation appropriate for characteristics of a video adapter.

The foregoing and/or other aspects of the present invention are also achieved by providing a display apparatus comprising: a signal receiving unit which receives an image signal from an imaging device; an image processor which performs an image processing operation on the image signal received by the signal receiving unit; a display unit which displays an image based on the image signal processed by the image processor; and a controller which determines characteristics of the imaging device, and controls the image processor to perform a color compensation on the displayed image according to the characteristics of the imaging device.

According to an aspect of the invention, the imaging device comprises a video adapter which generates the image signal, and the controller controls the color compensation to be performed when the video adapter is replaced.

According to an aspect of the invention, the display apparatus further comprises a data storage unit which stores a first identification information of the video adapter, wherein the signal receiving unit further receives a second identification information of the video adapter from the imaging device, and the controller determines whether the video adapter is replaced by comparing the first identification information with the second identification information.

According to an aspect of the invention, the first and second identification information include a driver information of the video adapter.

According to an aspect of the invention, the controller determines whether the video adapter is replaced when a connection with the imaging device is established.

According to an aspect of the invention, the controller updates the first identification information with the second identification information of the corresponding video adapter and stores the updated first identification information after performing the color compensation.

According to an aspect of the invention, the color compensation includes a compensation of RGB levels of the displayed image based on a white level of the received image signal.

According to an aspect of the invention, the controller controls the image processor not to perform the color compensation when a white pixel of the image of the received image signal is not continued for a predetermined time period.

According to an aspect of the invention, the controller displays a message on the display unit so as to request execution of a predetermined application program from a user when the white pixel of the image of the received image signal is not continued for the predetermined time period.

According to an aspect of the invention, the controller requests to execute a predetermined application program from the imaging device when the white pixel of the image of the image signal is not continued for the predetermined time period.

The foregoing and/or other aspects of the present invention are also achieved by providing a control method of a display apparatus which displays an image based on an image signal received from an imaging device, the control method comprising: determining characteristics of the imaging device; and performing a color compensation of the displayed image according to the determined characteristics of the imaging device.

According to an aspect of the invention, the imaging device comprises a video adapter which generates the image signal, the determining of the characteristics of the imaging device comprises determining whether the video adapter is replaced, and the performing of the color compensation comprises performing color compensation of the displayed image when the video adapter is replaced.

According to an aspect of the invention, the control method further comprises: storing a first identification information of the video adapter; receiving a second identification information of the video adapter from the imaging device, wherein the determining of whether the video adapter is replaced comprises determining replacement of the video adapter by comparing the stored first identification information with the second identification information.

According to an aspect of the invention, the first identification information and the second identification information include a driver information of the video adapter.

According to an aspect of the invention, the determining of the replacement of the video adapter is performed when the imaging device is connected to the display apparatus.

According to an aspect of the invention, the storing of the first identification information comprises updating the first identification information of the corresponding video adapter with the second identification information and storing the updated first identification information after performing the color compensation.

According to an aspect of the invention, the color compensation comprises a compensation of RGB levels of the displayed image based on a white level of the received image signal.

According to an aspect of the invention, the control method further comprises determining whether a white pixel of the image of the received image signal is continued, wherein the color compensation is performed when the white pixel of the image of the received image signal is continued for a predetermined time period.

According to an aspect of the invention, the control method further comprises displaying a message for requesting execution of a predetermined application program from a user when the white pixel of the image of the received image signal is not continued for the predetermined time period.

According to an aspect of the invention, the control method further comprises requesting of a predetermined application program from the imaging device when the white pixel of the image of the received image signal is not continued for the predetermined time period. The foregoing and/or other aspects of the present invention are also achieved by providing a display system comprising: an imaging device which generates an image signal; and a display apparatus which determines characteristics of the imaging device, performs a color compensation on the image of an image signal received from the imaging device according to the characteristics of the imaging device, and displays the color-compensated image.

According to an aspect of the invention, the display apparatus requests an execution of a predetermined application program from the imaging device when a white pixel of the image of the received image signal is not continued for a predetermined time period, and the imaging device executes the application program upon the request of the display apparatus.

### BRIEF DESCRIPTION OF THE DRAWINGS

The above and/or other aspects of the present invention will become apparent and more readily appreciated from the following description of the exemplary embodiments, taken in conjunction with the accompanying drawings, in which:
FIG. 1 shows a display apparatus and an imaging device according to a first exemplary embodiment of the present invention;
FIG. 2 is a block diagram of the display apparatus according to the first exemplary embodiment of the present invention;
FIG. 3 is a flowchart of an operation of the display apparatus according to the first exemplary embodiment of the present invention;
FIG. 4 is a block diagram of a display system according to a second exemplary embodiment of the present invention; and
FIG. 5 is a flowchart of an operation of the display system according to the second exemplary embodiment of the present invention.

### DETAILED DESCRIPTION OF EMBODIMENTS

Reference will now be made in detail to the exemplary embodiments of the present invention, examples of which are illustrated in the accompanying drawings, wherein like reference numerals refer to like elements throughout. The exemplary embodiments are described below so as to explain the present invention by referring to the figures.

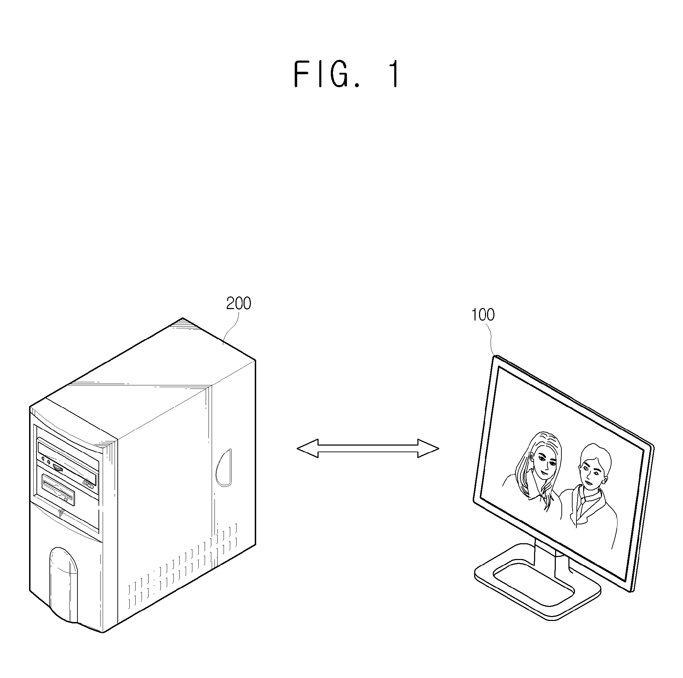

FIG. 1 shows a display apparatus 100 and an imaging device 200 according to a first exemplary embodiment of the present invention. The display apparatus 100 may be provided as, for example, a liquid crystal display (LCD) monitor. The display apparatus 100 is connected with the imaging device 200. The imaging device 200 includes a computer system (e.g., a PC). The display apparatus 100 receives an image signal from the imaging device 200, processes a predetermined image processing operation on the received image signal, and displays an image.

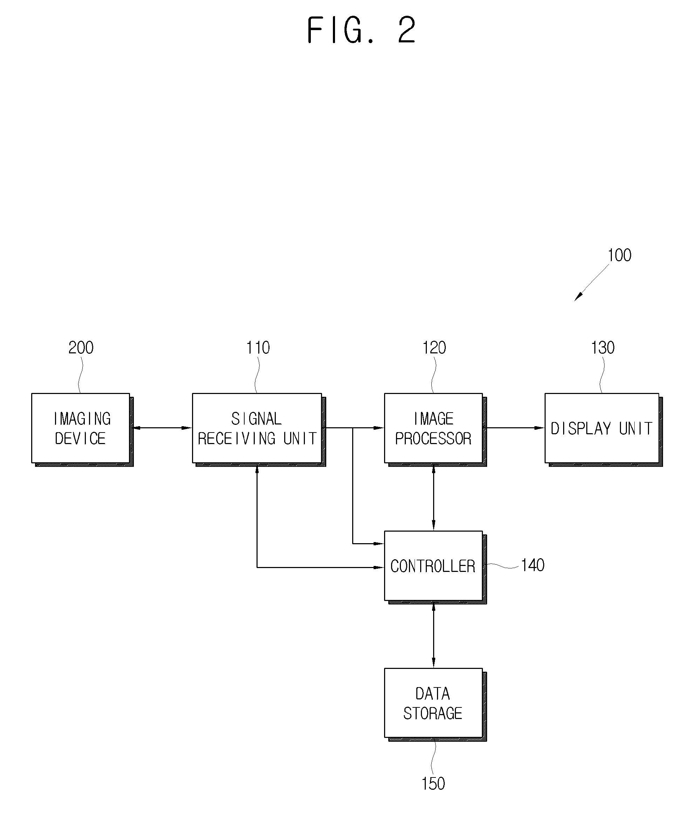

FIG. 2 is a block diagram of the display apparatus 100 according to the first exemplary embodiment of the present invention. The display apparatus 100 includes a signal receiving unit 110, an image processor 120, a display unit 130, and a controller 140.

The signal receiving unit 110 receives an image signal from the imaging device 200. The signal receiving unit 110 includes at least one connector (not shown) depending on a format of the received image signal. The connector includes a D-subminiature (D-SUB) connector (not shown) corresponding to an analog image signal, a Digital Visual Interface (DVI) connector (not shown) corresponding to a digital image signal, a High-Definition Multimedia Interface(HDMI) connector (not shown), a display port (not shown), and a Universal Serial Bus(USB) connector (not shown).

The image processor 120 processes the received image signal received by the signal receiving unit 110 according to a format of the corresponding image signal. For example, the image processor 120 performs imaging processing operations including analog-to-digital (A/D) conversion, decoding, scaling, and image enhancing.

The display unit 130 displays an image based on the image signal processed by the image processor 120. The display unit 130 may include an LCD.

The controller 140 controls overall operations of the display apparatus 100. The controller 140 determines characteristics of the imaging device 200, and controls the image processor 120 to perform color compensation on an image displayed on the display unit 130 according to the determined characteristics of the imaging device 200.

The imaging device 200 has a video adapter for generating the image signal in a predetermined format, and it is preferred that the characteristics of the imaging device correspond to characteristics of the video adapter. The characteristics of the video adapter include a driver information of the video adapter as an example of an identification information. The driver information includes a manufacturer, a model name, and a release version of the video adapter.

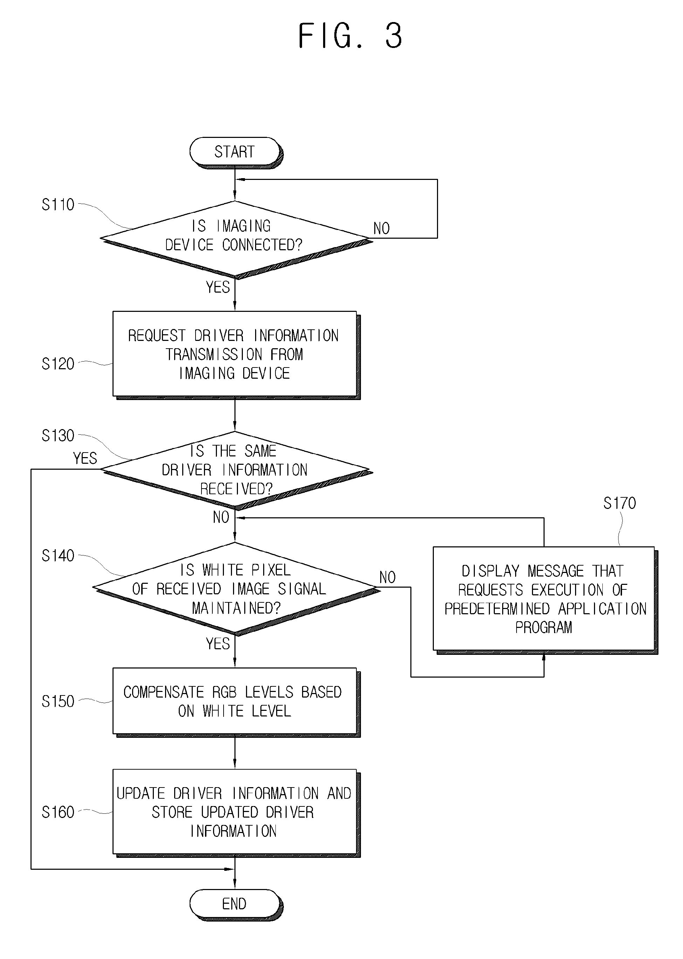

FIG. 3 is a flowchart of an operation of the display apparatus according to the first exemplary embodiment of the present invention. In operation S110, the controller 140 determines whether the imaging device 200 is connected. For example, the controller 140 determines that the imaging device 200 is connected when the image signal is received from the signal receiving unit 110 after the imaging device 200 is turned on.

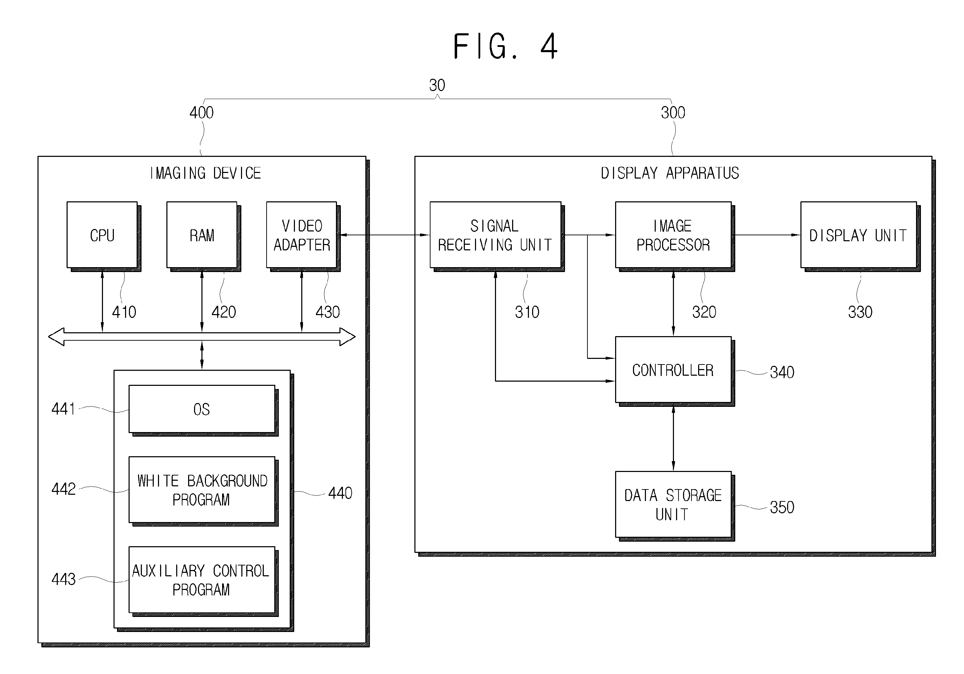

Subsequently, in operation S120, the controller 140 requests transmission of the driver information of the video adapter (430 of FIG. 4) from the imaging device 200 so as to determine characteristics of the imaging device 200. The imaging device 200 may have an operating system (OS, 441 of FIG. 4) for controlling the video adapter, and it is preferred that the controller 140 transmits an address in which the driver information is stored in a memory (420 of FIG. 4) managed by the OS, together with the driver information. Communication between the controller 140 and the imaging device 200 can be realized by a well-known communication protocol. The driver information of the video adapter transmitted from the imaging device 200 may be received through the signal receiving unit 110.

The controller 140 determines whether the corresponding video adapter is replaced with another video adapter with reference to the driver information of the video adapter received from the imaging device 200. For example, in operation S130, the controller 140 determines whether the received driver information of the video adapter corresponds to pre-stored driver information. In this case, it is preferred that the display apparatus 100 further includes a data storage unit 150 where the driver information of the video adapter has been already stored. Herein, the pre-stored driver information is an example of a first identification information and the received driver information is an example of a second identification information.

When the result of the operation of S130 shows that the two driver information are not the same, the controller 140 determines that the video adapter has been replaced and performs color compensation according to characteristics of the new video adapter. In order to perform the color compensation, the controller 140 determines whether a white pixel of an image of the image signal received by the signal receiving unit 110 is maintained for a predetermined time period (operation S140). The white pixel represents a pure white color code ("FF" in 256 color levels). The predetermined time period may be 1 to 2 seconds (60 to 120 frames) in the present exemplary embodiment. That is, the controller 140 determines whether a given white pixel is maintained at the same location for the corresponding 60 to 120 frames. In operation S140, it can be determined whether the white pixel is maintained by analyzing a histogram of luminance components of the received image signal.

When it is determined in operation S140 that the white pixel of the received image signal is maintained for the predetermined time period, the controller 140 controls the image processor 120 to compensate RGB levels of the image displayed on the display 130 based on a white level of the corresponding image signal (operation S150).

When it is determined in operation S140 that the white pixel is not maintained during the predetermined time period, the controller 140 displays a message in a form of on screen display (OSD) on the display unit 130 to request an execution of a predetermined application program (hereinafter, referred to as a "white background program" 442 of FIG. 4) which enables the white pixel to be maintained (operation S170). The white background program in the present exemplary embodiment may be provided as a note pad or a web browser in the case that the imaging device 200 is provided as a computer system. Accordingly, a user calls up the note pad or a web browser according to the displayed message so that a white pixel included in the corresponding window can be maintained for the predetermined time period. After performing operation S170, the process is returned to operation S140.

When operation S150 is performed, the controller 140 updates the pre-stored driver information with the driver information of the current video adapter that performed color compensation (operation of S160). After operation S160 is performed, the controller 140 may display a message to request not to perform unnecessary operations in order to prevent the updated driver information from being damaged.

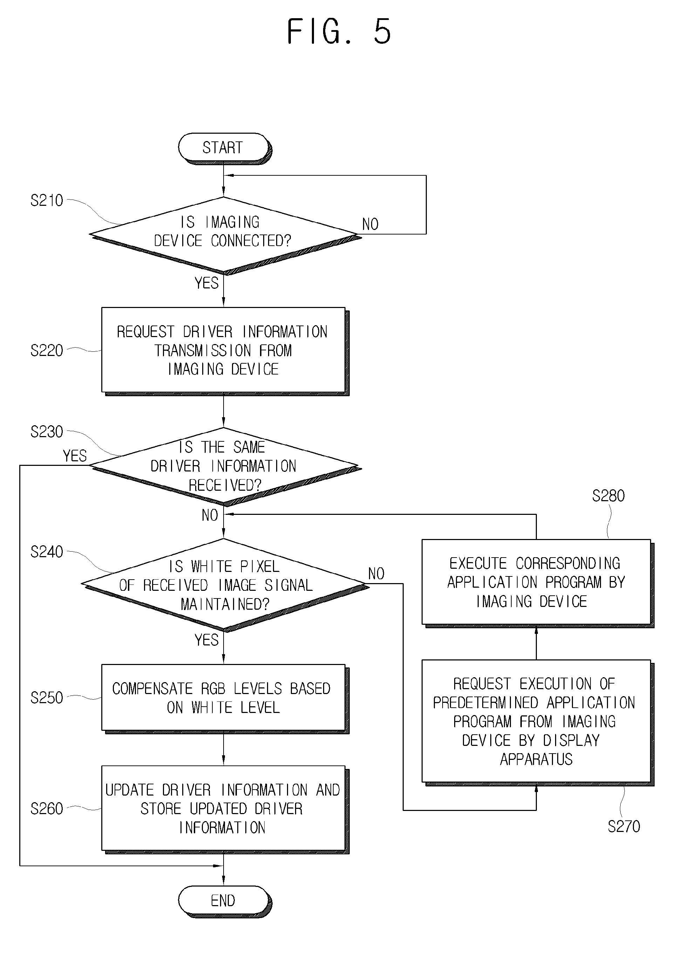

FIG. 4 is a block diagram of a display system 30 according to a second exemplary embodiment of the present invention. FIG. 5 is an operational flowchart of the display system 30 according to the second exemplary embodiment of the present invention. The display system 30 includes a display apparatus 300 and an imaging device 400. The display apparatus 300 includes a signal receiving unit 310, an image processor 320, a display unit 330, a controller 340, and a data storage unit 350. The signal receiving unit 310, the image processor 320, the display unit 330, the controller 340, and the data storage unit 350 are similar to or the same as the elements of the first exemplary embodiment, the signal receiving unit 110, the image processor 120, the display unit 130, the controller 140, and the data storage unit 150, respectively.

The imaging device 400 includes a central processing unit (CPU) 410 for executing a program, a random access memory (RAM) 420 in which the program executed by the CPU 410 is loaded and associated data is stored, a video adapter 430 for generating an image signal transmitted to the display apparatus 300, and a hard disk driver (HDD) 440 in which the program loaded in the RAM 420 and associated data are stored. The program loaded in the RAM 420 and executed by the CPU 410 includes an operating system (OS) 441 that operates the imaging device 400, a white background program 442 that provides a white background, such as a note pad or a web browser, and an auxiliary control program 443 that performs an operation according to a request of the controller 340 of the display apparatus 300.

The display apparatus 300 and the imaging device 400 in the second exemplary embodiment of the present invention are similar to or the same as the display apparatus 100 and the imaging device 200, respectively, as shown in FIG. 2 and FIG. 3. Therefore, only a difference therebetween will be further described.

Operations of S210 to S260 of FIG. 5 are similar to or the same as the operations of S110 to S160 of FIG. 3. When it is determined in the operation of S240 that a white pixel of a received image signal is not maintained during a predetermined time period, the controller requests the auxiliary control program 443 to execute the white background program 442 in operation S270. Subsequently, in operation S280, the auxiliary control program 441 executes the white background program 442 with support of the OS 441. Accordingly, a note pad or a web browser can be called up without control of the user such that a white pixel included in the corresponding window can be maintained for the predetermined time period. After operation S280 is performed, the process is returned to the operation of S240.

As described, according to the exemplary embodiments of the present invention, color compensation can be automatically performed according to characteristics of a video adapter to thereby improve image quality and user convenience.

Particularly, it is automatically detected and informed when color compensation needs to be performed for a user who does not know when to perform color compensation and the color compensation is automatically performed when a graphic card is changed, thereby improving user convenience. In addition, the color compensation is set to be performed upon a simple command for executing an application program installed in a typical computer system, thereby reducing a user's difficulty in carrying out color compensation operations.

Although a few exemplary embodiments of the present invention have been shown and described, it will be appreciated by those skilled in the art that changes may be made in these exemplary embodiments without departing from the principles and spirit of the invention, the scope of which is defined in the appended claims and their equivalents.

## Claims

1. A display apparatus comprising:
a signal receiving unit which receives an image signal from an imaging device;
an image processor which performs an image processing operation on the image signal received by the signal receiving unit;
a display unit which displays an image based on the image signal on which the image processing operation has been performed; and
a controller which determines characteristics of the imaging device, and controls the image processor to perform a color compensation on the displayed image according to the characteristics of the imaging device.

2. The display apparatus of claim 1, wherein the imaging device comprises a video adapter which generates the image signal, and the controller controls the color compensation to be performed if the video adapter is replaced with another video adapter.

3. The display apparatus of claim 2, further comprising a data storage unit which stores a first identification information of the video adapter,
wherein the signal receiving unit further receives a second identification information of the video adapter from the imaging device, and the controller determines whether the video adapter is replaced with another video adapter by comparing the first identification information with the second identification information.

4. The display apparatus of claim 3, wherein the first and second identification information include a driver information of the video adapter.

5. The display apparatus of claim 3, wherein the controller determines whether the video adapter is replaced if a connection with the imaging device is established.

6. The display apparatus of claim 5, wherein the controller updates the first identification information with the second identification information of the corresponding video adapter and stores the updated first identification information after performing the color compensation.

7. The display apparatus of claim 1, wherein the color compensation includes a compensation of RGB levels of the displayed image based on a white level of the received image signal.

8. The display apparatus of claim 7, wherein the controller controls the image processor not to perform the color compensation if a white pixel of the image of the received image signal does not continue for a time period.

9. The display apparatus of claim 8, wherein the controller displays a message on the display unit so as to request execution of an application program from a user if the white pixel of the image of the received image signal does not continue for the time period.

10. The display apparatus of claim 8, wherein the controller requests to execute an application program from the imaging device if the white pixel of the image of the image signal does not continue for the time period.

11. A control method of a display apparatus which displays an image based on an image signal received from an imaging device, the control method comprising:
determining characteristics of the imaging device; and
performing a color compensation of the displayed image according to the determined characteristics of the imaging device.

12. The control method of claim 11, wherein the imaging device comprises a video adapter which generates the image signal,
the determining the characteristics of the imaging device comprises determining whether the video adapter is replaced with another video adapter, and
the performing the color compensation comprises performing color compensation of the displayed image if the video adapter is replaced.

13. The control method of claim 12, further comprising:
storing a first identification information of the video adapter;
receiving a second identification information of the video adapter from the imaging device,
wherein the determining whether the video adapter is replaced comprises comparing the stored first identification information with the second identification information.

14. The control method of claim 13, wherein the first identification information and the second identification information include a driver information of the video adapter.

15. The control method of claim 13, wherein the determining whether the video adapter is replaced is performed if the imaging device is connected to the display apparatus.

16. The control method of claim 13, wherein the storing of the first identification information comprises updating the first identification information of the corresponding video adapter with the second identification information and storing the updated first identification information after performing the color compensation.

17. The control method of claim 11, wherein the color compensation comprises a compensation of RGB levels of the displayed image based on a white level of the received image signal.

18. The control method of claim 17, further comprising determining whether a white pixel of the image of the received image signal is continued,
wherein the color compensation is performed if the white pixel of the image of the received image signal is continued for a time period.

19. The control method of claim 18, further comprising displaying a message for requesting execution of an application program from a user if the white pixel of the image of the received image signal is not continued for the time period.

20. The control method of claim 18, further comprising requesting of an application program from the imaging device if the white pixel of the image of the received image signal does not continue for the time period.

21. A display system comprising:
an imaging device which generates an image signal; and
a display apparatus which determines characteristics of the imaging device, performs a color compensation on an image of the image signal received from the imaging device according to the characteristics of the imaging device, and displays the color-compensated image.

22. The display system of claim 21, wherein the display apparatus requests an execution of an application program from the imaging device when a white pixel of the image of the received image signal does not continue for a time period, and the imaging device executes the application program upon the request of the display apparatus.
